(19) Europäisches Patentamt
European Patent Office
Office européen des brevets

(11) **EP 4 640 367 A1**

(12) **EUROPEAN PATENT APPLICATION**
published in accordance with Art. 153(4) EPC

(43) Date of publication:
**29.10.2025 Bulletin 2025/44**

(21) Application number: **23906387.8**

(22) Date of filing: **08.09.2023**

(51) International Patent Classification (IPC):
**B23Q 15/18** (2006.01)  **G05B 19/404** (2006.01)

(52) Cooperative Patent Classification (CPC):
**B23Q 15/18; G05B 19/404**

(86) International application number:
**PCT/JP2023/032831**

(87) International publication number:
**WO 2024/135010 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.12.2022 JP 2022202074**

(71) Applicants:
• **Citizen Watch Co., Ltd.
Nishitokyo-shi, Tokyo 188-8511 (JP)**
• **Citizen Machinery Co., Ltd.
Nagano 389-0206 (JP)**

(72) Inventor: **HOTTA Kazuhiro
Kitasaku-gun, Nagano 389-0206 (JP)**

(74) Representative: **Louis Pöhlau Lohrentz
Patentanwälte
Merianstrasse 26
90409 Nürnberg (DE)**

(54) **DEVICE FOR CORRECTING THERMAL DISPLACEMENT OF MACHINE TOOL**

(57)    To improve the correction accuracy relative to thermal displacement in a thermal displacement correction device for a machine tool, the thermal displacement correction device (100) includes a temperature sensor (Si) provided in a plurality of portions of an automatic lathe (200), a memory (30) that stores a plurality of data tables (31) set for each of a plurality of environmental conditions, which are different from each other, as a correspondence relationship between a temperature distribution of the automatic lathe (200) detected by the temperature sensor (Si) corresponding to machining under a machining condition and a thermal displacement amount of a position of the tool of the automatic lathe, a comparison selection portion (20) selects the data table (31) having a temperature distribution closest to the temperature distribution detected when the automatic lathe (200) machines at a site, a thermal displacement estimation portion (40) that estimates the thermal displacement amount based on the selected data table (31) and the detected temperature distribution, and a correction command portion (50) that outputs a thermal displacement correction amount to correct the position of the tool to cancel the estimated thermal displacement amount.

[FIG.1]

**Description**

[TECHNICAL FIELD]

The present invention relates to a thermal displacement correction device for a machine tool.

[Background Art]

A machine tool generates heat in a driving source and a sliding portion, etc., by operating the driving source to displace, for example, to rotate and to move a workpiece and a tool. In addition, the machine tool also generates heat at the contact point between the workpiece and the tool. This heat displaces various portions of the machine tool due to thermal expansion, etc., which changes the position of the tool relative to the workpiece and affects the dimensional accuracy of the product obtained by machining the workpiece.

Therefore, the machine tool includes a thermal displacement correction device that suppresses the effects of the displacement due to the heat. The thermal displacement correction device includes a temperature sensor provided in various portions of the machine tool, a thermal displacement estimation portion that estimates the displacement amount of the position of the tool relative to the workpiece based on a temperature detected by each temperature sensor, and a correction command portion that outputs a correction command to a control portion of the machine tool to correct the position of the tool to cancel the displacement amount estimated by the thermal displacement portion.

The thermal displacement estimation portion stores the correspondence relationship between the detected temperature Ti (i = 1, 2, 3, ...) and the measured displacement amount (thermal displacement amount) $\Delta A$ of the positions of the workpiece and the tool as the following multiple regression equation (1). The detected temperature Ti is detected by each temperature sensor under each machining condition when a workpiece is previously machined under various machining conditions (e.g., condition regarding machining step such as cutting amount, rotation speed of workpiece, and feeding speed of tool).

$$\Delta A = \alpha 1 * T1 + \alpha 2 * T2 + \alpha 3 * T3 + ... \qquad (1)$$

In the equation (1), $\alpha i$ (i = 1, 2, 3, ...) is a coefficient (thermal displacement coefficient) corresponding to the detected temperature Ti by each temperature sensor, and is preset to satisfy the equation (1) for various machining conditions.

The thermal displacement estimation portion estimates the thermal displacement amount $\Delta A$ based on the detected temperature Ti detected by each temperature sensor when the machine tool is actually used to manufacture a product and the stored equation (1). The output portion of the thermal displacement correction device outputs the correction command, to the control portion of the machine tool, to correct the thermal displacement estimated by the thermal displacement estimate portion to cancel the thermal displacement amount. The control portion of the machine tool controls the position of the tool relative to the workpiece to perform the correction that cancels the thermal displacement amount based on the correction command output from the correction command portion of the thermal displacement correction device, thereby reducing the effects of the thermal displacement on the dimensional accuracy of the product obtained by machining with the machine tool (see e.g., Patent Document 1).

[Prior Art Documents]

[Patent Literature]

[Patent Literature 1] JP2004-154907A

[Summary of Invention]

[Problem to be solved]

Meanwhile, the thermal displacement coefficient $\alpha i$ in the equation (1) stored in the thermal displacement estimation portion of the thermal displacement correction device is set when the machine tool is placed in a predetermined reference environment. On the other hand, as the machine tool is installed and used at a site where a product is actually manufactured, the environment in which the machine tool is installed varies greatly and may differ from the predetermined reference environment.

Therefore, to manufacture a product with higher dimensional accuracy in an environment in which a machine tool is installed, it is necessary to improve the correction accuracy of the machine tool relative to the thermal displacement.

The present invention has been made in view of the above circumstances and aims to provide a thermal displacement correction device for a machine tool that can improve the correction accuracy relative to the thermal displacement.

[Solution to Problem]

The present invention relates to a thermal displacement correction device for a machine tool, including: a temperature sensor provided in each of a plurality of portions of a machine tool; a memory configured to store a plurality of correspondence relationships set for each of a plurality of environmental conditions, which are different from each other, as a correspondence relationship between a temperature distribution of the machine tool detected by the temperature sensor corresponding to machining under a previously set predetermined machining condition and a thermal displacement amount of a position of the tool relative to a workpiece machined by the tool of the machine tool; a comparison selection portion configured to compare the temperature distribution of the machine tool detected by the temperature sensor when the machine tool machines under an environmental condition in which the machine tool is installed with the temperature distribution of the machine tool in a plurality of correspondence relationships stored in the memory, and select one of a plurality of correspondence relationships stored in the memory that is closest to the temperature distribution of the machine tool detected under the environmental condition in which the machine tool is installed; a thermal displacement estimation portion configured to estimate the thermal displacement amount under the environmental condition in which the machine tool is installed based on the one correspondence relationship selected by the comparison selection portion and the temperature distribution of the machine tool detected under the environmental condition in which the machine tool is installed; and a correction command portion configured to output a thermal displacement correction amount to correct the position of the tool to cancel the thermal displacement amount estimated by the thermal displacement estimation portion.

[Effects of Invention]

According to the thermal displacement correction device for a machine tool according to the present invention, the correction accuracy relative to the thermal displacement can be improved.

[Brief Description of Drawings]

[FIG. 1] FIG. 1 is a block diagram illustrating a configuration of a thermal displacement correction device.
[FIG. 2] FIG. 2 is a perspective view illustrating an automatic lathe in which thermal displacement is corrected by the thermal displacement correction device.
[FIG. 3] FIG. 3 is an example illustrating a relationship between an elapsed time t and a temperature Ti of each portion under a first machining condition K1 shown in Table 1.
[FIG. 4] FIG. 4 is a flowchart describing a flow of an operation of the thermal displacement correction device.

[Detailed Description of Embodiments]

An embodiment of a thermal displacement correction device for a machine tool according to the present invention is described below with reference to the drawings.

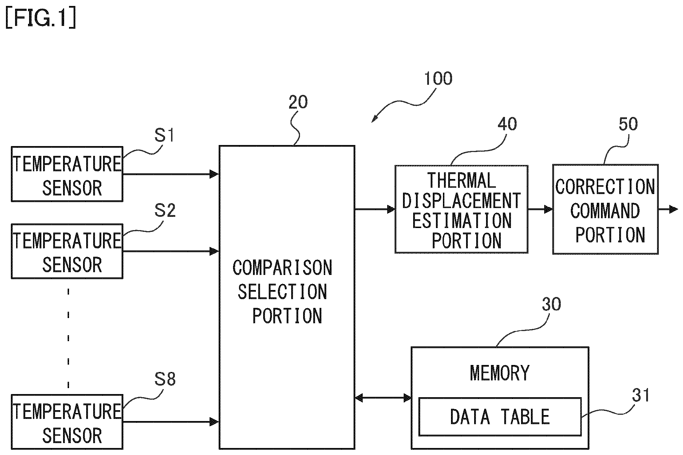

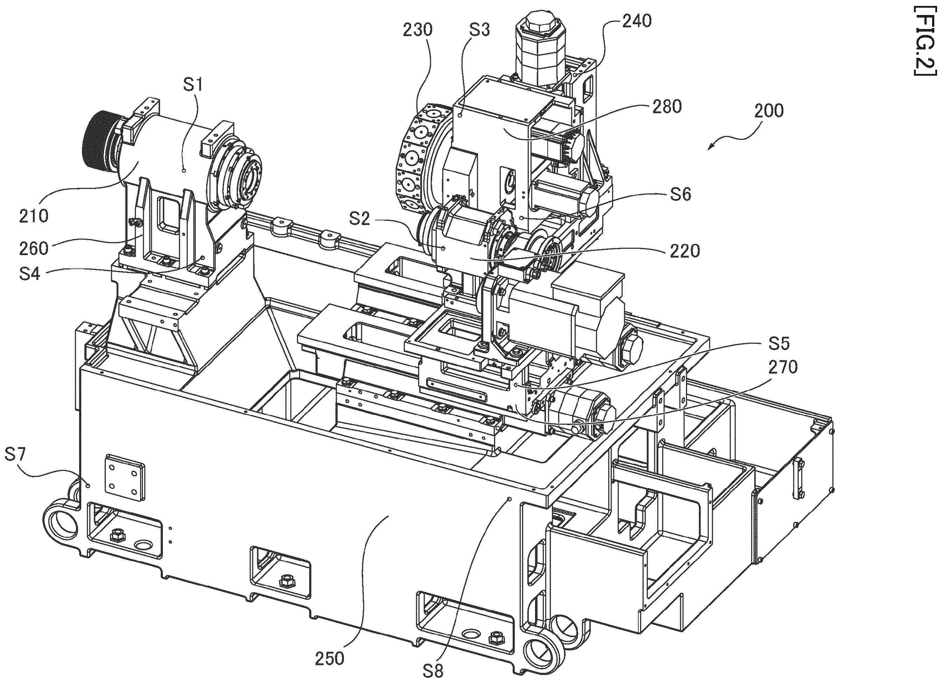

<Configuration> FIG. 1 is a block diagram illustrating a configuration of a thermal displacement correction device 100, and FIG. 2 is a perspective view illustrating an automatic lathe 200 in which thermal displacement is corrected by the thermal displacement correction device 100. The thermal displacement correction device 100 illustrated in the figures is an embodiment of a thermal displacement correction device for a machine tool according to the present invention, and the automatic lathe 200 is an embodiment of a machine tool to which the thermal displacement correction device for a machine tool according to the present invention is applied.

(Automatic lathe) The automatic lathe 200 is an NC lathe whose operation is controlled by a computer that reads a predetermined program to execute. As illustrated in FIG. 2, the automatic lathe 200 includes on a bed 250, a front main spindle 210, a rear main spindle 220, a turret tool post 230, and a control portion 240. The rear main spindle 220 is disposed to face the front main spindle 210. The front main spindle 210 and the rear main spindle 220 can each independently hold a workpiece as a machining target and rotate it about its axis, and can also transfer the workpiece to each other.

The front main spindle 210 is mounted on a spindle headstock 260 provided on the bed 250. The rear main spindle 220 is mounted on a slide base 270 provided on the bed 250.

The turret tool post 230 has a plurality of tools for machining the workpiece provided on an outer peripheral surface of a rotating turret. The turret tool post 230 selects a tool in accordance with the rotation of the turret. The automatic lathe 200 performs machining such as cutting and drilling on the workpiece by rotating the front main spindle 210 and the rear main spindle 220 about axes while bringing the selected tool on the turret tool post 230 into contact with the workpiece. The turret tool post 230 is mounted on a slide support base 280.

The control portion 240 controls the positions, the movement, and the speed of the front main spindle 210, the rear main spindle 220, the turret tool post 230, the slide base 270, and the slide support base 280 by a computer that reads a predetermined program to execute. Additionally, the control portion 240 corrects the positions of the front main spindle 210, the rear main spindle 220, the turret tool post 230, the slide base 270, and the slide support base 280 in response to a correction command output from a correction command portion 50 of the thermal displacement correction device 100 described below. The automatic lathe 200 includes a coolant system (not illustrated) that discharges coolant, and the control portion 240 also controls the operation of the coolant system.

(Thermal displacement correction device) The thermal displacement correction device 100 is provided in the automatic lathe 200. The thermal displacement correction device 100 suppresses the effect of the displacement by heat (thermal displacement) caused by the automatic lathe 200, and outputs a correction command, to the control portion 240 of the automatic lathe 200, to correct the position of the machining point to cancel the thermal displacement at the machining point (point where tool contacts workpiece) in the automatic lathe 200.

As illustrated in FIG. 1, the thermal displacement correction device 100 includes a temperature sensors Si (i = 1, 2, ..., 8), a memory 30, a comparison selection portion 20, a thermal displacement estimation portion 40, and a correction command portion 50.

As illustrated in FIG. 2, the temperature sensor Si is provided in a plurality of locations (in this embodiment, eight locations (i = 1, 2, ..., 8), for example) of the automatic lathe 200. More particularly, the temperature sensor S1 is provided in the front main spindle 210, the temperature sensor S2 is provided in the rear main spindle 220, the temperature sensor S3 is provided in the turret tool post 230, the temperature sensor S4 is provided in the spindle headstock 260, the temperature sensor S5 is provided in the slide base 270, the temperature sensor S6 is provided in the slide support base 280, the temperature sensor S7 is provided in the portion of the bed 250 that is close to the spindle headstock 260, and the temperature sensor S8 is provided in the portion of the bed 250 that is close to the slide base 270. Each temperature sensor detects the temperature at each provided location.

In the following, when the temperature sensors S1, S2, ..., S8 are not distinguished, they are collectively referred to as a temperature sensor Si.

the comparison selection portion 20 compares the temperature distribution (thermal balance) of the automatic lathe 200 detected by the eight temperature sensors Si when the automatic lathe 200 actually operates to manufacture a product with a plurality of temperature distributions measured when the automatic lathe 200 operates a predetermined machining operation under a plurality of previously set environment conditions stored in the memory 30 described later, and selects a temperature distribution closest to the temperature distribution when the automatic lathe 200 actually operates.

The memory 30 stores the above described temperature distributions as a data table 31. More specifically, first, the automatic lathe 200 operates to machine a previously set predetermined workpiece under a plurality of previously set machining conditions Kp (p = 1, 2, ..., for example, condition regarding machining step by automatic lathe 200 such as cutting amount, rotation speed of workpiece, and feeding speed of tool) to manufacture a product having a previously set predetermined shape.

At this time, an elapsed time t [second] from the start of the machining by the automatic lathe 200 and the temperature Ti (T1, T2, ... T8) of each portion of the automatic lathe 200 detected by each temperature sensor Si (S1, S2, ..., S8) when the workpiece is machined under each machining condition Kp are detected and recorded, and the thermal displacement amount ΔA of the position of the machining point where the tool on the turret tool post 230 contacts the workpiece at that time is recorded.

For example, Table 1 shows the correspondence among the elapsed time t [second], the detected temperature Ti (T1, T2, ..., T8) at each portion, and the measured thermal displacement amount ΔA of the position of the machining point when the product is manufactured by machining the workpiece under the first machining condition K1

[Table 1]

K1

| ELAPSED TIME t[SECOND] | TEMPERATURE [°C] | | | | | | | | THERMAL DISPLACEMENT AMOUNT ΔA[mm] |
|---|---|---|---|---|---|---|---|---|---|
| | T1 | T2 | T3 | T4 | T5 | T6 | T7 | T8 | |
| ..... | .. | .. | .. | .. | .. | .. | .. | .. | ..... |
| ..... | .. | .. | .. | .. | .. | .. | .. | .. | ..... |
| ..... | .. | .. | .. | .. | .. | .. | .. | .. | ..... |

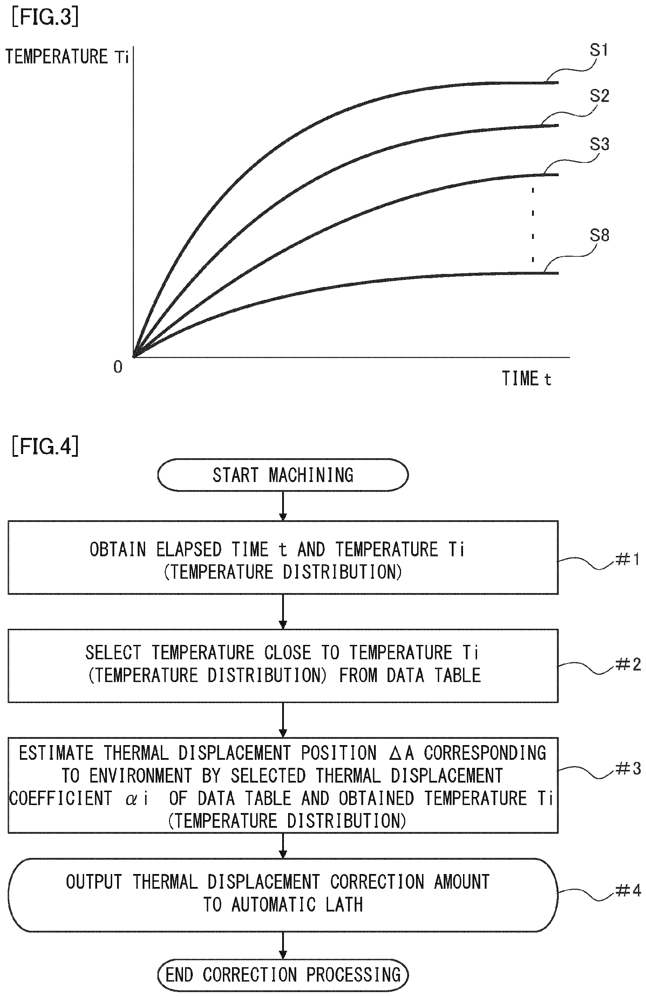

FIG. 3 is an example showing the correspondence relationship between the elapsed time t and the temperature Ti of each portion under the first machining condition K1 shown in Table 1. The elapsed time t and the temperature Ti of each portion under the first machining condition K1 described above are as shown in FIG. 3, for example. Note that FIG. 3 is a schematic diagram for simply describing the relationship between the elapsed time t and the temperature Ti of each portion, and does not show the relationship between the actually measured elapsed time t and the temperature Ti of each portion.

In this way, the thermal displacement coefficient $\alpha i$ (i = 1, 2, 3, ...) corresponding to the temperature sensors Si is calculated so that the thermal displacement amount $\Delta A$ of the position of the machining point and the temperature Ti (T1, T2, ..., T8) of each portion at each elapsed time t under the first machining condition K1 satisfy the following multiple regression equation (1).

$$\Delta A = \alpha 1 * T1 + \alpha 2 * T2 + ... + \alpha 8 * T8 \quad (1)$$

As a result of the calculation, as shown in Table 2, the set $(\alpha_1, \alpha_2, ..., \alpha_8)$ of the thermal displacement coefficient $\alpha i$ (i = 1, 2, ..., 8) of the temperature sensor Si is associated with the elapsed time t under the first machining condition K1.

[Table 2]

## K1

| ELAPSED TIME t[SECOND] | THERMAL DISPLACEMENT COEFFICIENT | | | | | | | |
|---|---|---|---|---|---|---|---|---|
| | $\alpha 1$ | $\alpha 2$ | $\alpha 3$ | $\alpha 4$ | $\alpha 5$ | $\alpha 6$ | $\alpha 7$ | $\alpha 8$ |
| ..... | .. | .. | .. | .. | .. | .. | .. | .. |
| ..... | .. | .. | .. | .. | .. | .. | .. | .. |
| ..... | .. | .. | .. | .. | .. | .. | .. | .. |

Then, using the same workpiece, similar in other machining conditions Kp (second machining condition K2, third machining condition K3, ...), the elapsed time t [second], the detected temperature Ti (T1, T2, ..., T8) at each portion, and the measured thermal displacement amount ∆A of the position of the machining point are associated, and the thermal displacement coefficient $\alpha i$ (i = 1, 2, 3, ...) corresponding to the temperature sensor Si is calculated to satisfy the multiple regression equation (1), and the elapsed time t and the sets ($\alpha 1$, $\alpha 2$, ..., $\alpha 8$) of the thermal displacement coefficient $\alpha i$ (i = 1, 2, ..., 8) of the temperature sensor Si are then associated with the machining condition Kp, similar to Table 2.

The number of machining conditions p is, for example, ten (p = 1, 2, ..., 10) in this embodiment; however, the number of machining conditions may be one or more and nine or less, or eleven or more.

Next, the environmental condition Mq corresponding to the environment of the site where the automatic lathe 200 is installed is changed, and in a plurality of environmental conditions Mq, the temperature Ti and the thermal displacement amount ∆A are measured at each elapsed time t under the above described each machining condition Kp, and the set ($\alpha 1$, $\alpha 2$, ..., $\alpha 8$) of the thermal displacement coefficient $\alpha i$ (i = 1, 2, ..., 8) of the temperature sensor Si corresponding to each environmental condition Mq for each elapsed time t under each machining condition Kp is associated.

The environmental condition Mq is a condition other than the above described machining condition Kp, which assumes the environmental of the site where the automatic lathe 200 is actually installed, and in particular, a condition that affects the thermal displacement of the position of the machining point of the tool. The environmental condition Mq specifically is a condition that may change the temperature of the automatic lathe 200 such as an ambient temperature (room temperature) of a site where the automatic lathe 200 is installed, partial sunlight, and a positional relationship with a surrounding heat source.

The number of previously set environmental conditions Mq is, for example, ten; however, the number of previously set environmental conditions may be any number of two or more, and may be nine or less or eleven or more.

In this way, before the automatic lathe 200 is actually installed in the environment where it manufactures a product, the automatic lathe 200 is experimentally installed under various anticipated environmental conditions Mq, and the correspondence relationship (Table 1 as one example) between the temperature distribution Ti of each portion and the thermal displacement amount ∆A under each environmental condition Mq in a plurality of environmental conditions Mq under each machining condition Kp obtained by machining the workpiece under the various machining conditions Kp at each elapsed time is stored in the memory as the data table 30.

Furthermore, each data table 31 also includes the correspondence relationship (Table 2 as one example) between the distribution of temperature Ti of each portion and the set of the thermal displacement coefficient $\alpha i$ (e.g., $\alpha 1$, $\alpha 2$, ..., $\alpha 8$) under each environmental condition Mq in a plurality of environmental conditions Mq under each machining condition Kp obtained by machining the workpiece under various machining conditions Kp at each elapsed time t.

The memory 30 stores, as described above, many data tables 31 under each environmental condition Mq that assumes the site where the automatic lathe 200 is installed before the automatic lathe 200 is actually installed at the site where the product is manufactured. The comparison selection portion 20 compares, when the automatic lathe 200 is installed at a specific site and machines a workpiece for manufacturing a product, the temperature Ti (temperature distribution) of each portion of the automatic lathe 200 detected by the eight temperature sensors Si at a predetermined elapsed time t with the temperature distribution in the data table 31 of the temperature distribution.

Then, the comparison selection portion 20 selects one of the many data tables 31 stored in the memory 30 that has the temperature distribution closest to the temperature Ti (temperature distribution) actually detected from the automatic lathe 200 installed at a specific site, and outputs the data table together with the actually detected temperature Ti (temperature distribution) to the thermal displacement estimation portion 40.

The thermal displacement estimation portion 40 estimates the thermal displacement amount $\Delta A$ of the position of the machining point in the temperature distribution with the multiple regression equation (1) by using the set of the thermal displacement coefficient $\alpha i$ ($\alpha 1$, $\alpha 2$,...$\alpha 8$) of the data table 31 input from the comparison selection portion 20 and the temperature Ti actually detected in each portion when installed and operated at a specific site, and outputs the estimated thermal displacement amount $\Delta A$ to the correction command portion 50.

The correction command portion 50 calculates the thermal displacement correction amount to correct the position of the machining point of the tool of the automatic lathe 200 to a position that cancels the thermal displacement amount $\Delta A$ input from the thermal displacement estimation portion 40, and outputs this thermal displacement correction amount to the control portion 240 of the automatic lathe 200.

<Operation> FIG. 4 is a flowchart describing the flow of the operation of the thermal displacement correction device 100. The thermal displacement correction device 100 of this embodiment operates as follows using the flowchart in FIG. 4.

After the automatic lathe 200 is installed at a site where a product is manufactured by actually machining a workpiece with a tool, the automatic lathe 200 starts machining. The comparison selection portion 20 obtains a predetermined elapsed time t from the start of the machining by the automatic lathe 200 and the temperature Ti (temperature distribution) of each portion of the automatic lathe 200 detected by the eight temperature sensors Si provided in the automatic lathe 200 (#1).

The comparison selection portion 20 compares the temperature Ti (temperature distribution) of the automatic lathe 200 at the obtained elapsed time t with the distribution of the temperature Ti at each elapsed time t in a plurality of data tables 31 stored in the memory 30, and selects one with the closest temperature distribution (#2).

Here, "closest temperature distribution" can be defined as, for example, when the number of temperature sensors Si having the temperature Ti of the corresponding temperature sensor Si in the data table 31, which corresponds to the temperature of the approximate range of $\pm 5\%$, for example, to the obtained each temperature Ti, is a predetermined set number or more.

The approximate range of the obtained each temperature Ti is not limited to the above described $\pm 5\%$ range; however, may also be $\pm 10\%$ or other preset ranges. Additionally, the number of temperature sensors Si of the approximate range when defining as "closest temperature distribution" may be appropriately set, for example, three or more, four or more, or five or more.

Furthermore, "closest temperature distribution" may, for example, be calculated by weighting in the calculation of the number for the temperature sensor Si with a large effect when the magnitude of the effect on the thermal displacement amount $\Delta A$ by the temperature Ti has an order of temperature sensors. The specific degree of the weighting may be adjusted according to the environmental condition at the site where the automatic lathe 200 is installed.

The thermal displacement estimation portion 40 estimates the thermal displacement amount $\Delta A$ when the automatic lathe 200 is actually used with the multiple regression equation (1) based on the set of thermal displacement coefficient $\alpha i$ ($\alpha 1$, $\alpha 2$, ..., $\alpha 8$) of the data table 31 selected by the comparison selection portion 20 and the obtained temperature Ti (temperature distribution) of the automatic lathe 200 at the elapsed time (#3).

The correction command portion 50 calculates the thermal displacement correction amount to correct the position of the machining point of the tool of the automatic lathe 200 to the position that cancels the thermal displacement amount $\Delta A$ based on the thermal displacement amount $\Delta A$ estimated by the thermal displacement estimation portion 40, and outputs the calculated thermal displacement correction amount to the control portion 240 of the automatic lathe 200 (#4).

As described in detail above, the thermal displacement correction device 100 of the automatic lathe 200 of the present embodiment stores the data table 31 containing the thermal displacement coefficient $\alpha i$ and the temperature Ti (temperature distribution) under each of a plurality of environmental conditions assumed as the environment of the site where the automatic lathe 200 is actually installed, and corrects the thermal displacement amount at the site with the data table 31 containing the temperature Ti (temperature distribution) closest to the temperature Ti (temperature distribution) actually obtained at the installation site.

Therefore, the thermal displacement amount can be corrected to be suitable to the environment of the site where the automatic lathe 200 is installed, thereby improving the correction accuracy of the thermal displacement.

In the thermal displacement correction device 100 of this embodiment, the comparison selection portion 20 selects the data table 31 with the closest temperature distribution; however, no data table 31 with the specified closest temperature distribution may exist. Therefore, the memory 30 stores a set ($\alpha s1$, $\alpha s2$, ..., $\alpha s8$) of a reference thermal displacement coefficient $\alpha si$ ($i$ = 1, 2, ..., 8) set corresponding to the reference environmental condition K0 as the reference data table. Then, the comparison selection portion 20 selects this reference data table (# 2).

The thermal displacement estimation portion 40 estimates thermal displacement amount $\Delta A$ when the automatic lathe 200 is actually used with the multiple regression equation (1) based on the set of reference thermal displacement coefficient $\alpha si$ ($\alpha s1$, $\alpha s2$,..., $\alpha s8$) of the reference data table and the temperature Ti (temperature distribution) of the automatic lathe 200 at the obtained elapsed time t (step #3). The correction command portion 50 then calculates the thermal displacement correction amount to correct the position of the machining point of the tool in the automatic lathe 200 to the position that cancels the thermal displacement amount $\Delta A$ based on the thermal displacement amount $\Delta A$ estimated by the thermal displacement estimation portion 40, and outputs the calculated thermal displacement correction amount to the control portion 240 of the automatic lathe 200 (# 4).

The thermal displacement correction device 100 can correct the thermal displacement amount corresponding to the reference environmental condition by applying the set of the thermal displacement coefficient $\alpha s1$, $\alpha s2$, ..., $\alpha s8$ of the reference data table when there is no data table 31 with the specified closest temperature distribution. Although this correction may not always be optimal for a wide range of environmental conditions, it enables standard correction.

The thermal displacement correction device 100 of this embodiment includes the eight temperature sensors Si ($i$ = 1, 2, ..., 8); however, the number of temperature sensors Si is not limited to eight and may be two or more, seven or less, or nine or more. Furthermore, the portion where the temperature sensor Si is provided is not limited to the portion of the automatic lathe 200 described in this embodiment, and they may be provided in other portions.

In this embodiment, the thermal displacement correction device 100 is applied to the automatic lathe 200 including the front main spindle 210, the rear main spindle 220, and the turret tool post 230 as one example of a machine tool. However, the automatic lathe 200 may have only one main spindle (front main spindle), or may have three or more main spindles, and the turret tool post 230 may be replaced with a comb shaped tool post.

In this embodiment, the thermal displacement correction device 100 is applied to the automatic lathe 200 as one example of a machine tool; however the thermal displacement correction device of the present invention is not limited to the application to an automatic lathe and can be applied to a machine tool other than an automatic lathe that performs various plastic processing on a workpiece.

[Cross-Reference to Related Applications]

This application claims priority based on Japanese Patent Application No. 2022-202074 filed with the Japan Patent Office on December 19, 2022, and the entire disclosure thereof is incorporated herein by reference.

**Claims**

1. A thermal displacement correction device for a machine tool, comprising:

   a temperature sensor provided in each of a plurality of portions of a machine tool;
   a memory configured to store a plurality of correspondence relationships set for each of a plurality of environmental conditions, which are different from each other, as a correspondence relationship between a temperature distribution of the machine tool detected by the temperature sensor corresponding to machining under a previously set predetermined machining condition and a thermal displacement amount of a position of the tool relative to a workpiece machined by the tool of the machine tool;
   a comparison selection portion configured to compare the temperature distribution of the machine tool detected by the temperature sensor when the machine tool machines under an environmental condition in which the machine tool is installed with the temperature distribution of the machine tool in a plurality of correspondence relationships stored in the memory, and select one of a plurality of correspondence relationships stored in the memory that is closest to the temperature distribution of the machine tool detected under the environmental condition in which the machine tool is installed;
   a thermal displacement estimation portion configured to estimate the thermal displacement amount under the environmental condition in which the machine tool is installed based on the one correspondence relationship selected by the comparison selection portion and the temperature distribution of the machine tool detected under the environmental condition in which the machine tool is installed; and
   a correction command portion configured to output a thermal displacement correction amount to correct the position of the tool to cancel the thermal displacement amount estimated by the thermal displacement estimation portion.

2. The thermal displacement correction device for a machine tool according to claim 1, wherein the environmental condition is a condition that affects a temperature relative to the machine tool in an environment where the machine tool is installed.

3. The thermal displacement correction device for a machine tool according to claim 1 or claim 2, wherein

the memory stores a reference correspondence relationship set for a reference environmental condition as one of the plurality of correspondence relationships set for each of the plurality of environmental conditions which are different from each other, and
the comparison selection portion selects the reference correspondence relationship when there is no one correspondence relationship closest to the temperature distribution of the machine tool detected under the environmental condition in which the machine tool is installed.

[FIG.1]

[FIG.2]

[FIG.3]

[FIG.4]

START MACHINING

OBTAIN ELAPSED TIME t AND TEMPERATURE Ti
(TEMPERATURE DISTRIBUTION)          #1

SELECT TEMPERATURE CLOSE TO TEMPERATURE Ti
(TEMPERATURE DISTRIBUTION) FROM DATA TABLE          #2

ESTIMATE THERMAL DISPLACEMENT POSITION △A CORRESPONDING
TO ENVIRONMENT BY SELECTED THERMAL DISPLACEMENT
COEFFICIENT αi OF DATA TABLE AND OBTAINED TEMPERATURE Ti
(TEMPERATURE DISTRIBUTION)          #3

OUTPUT THERMAL DISPLACEMENT CORRECTION AMOUNT
TO AUTOMATIC LATH          #4

END CORRECTION PROCESSING

## INTERNATIONAL SEARCH REPORT

| International application No. |
| --- |
| **PCT/JP2023/032831** |

| A. | CLASSIFICATION OF SUBJECT MATTER |
| --- | --- |

*B23Q 15/18*(2006.01)i; *G05B 19/404*(2006.01)i
FI:   B23Q15/18; G05B19/404 K

According to International Patent Classification (IPC) or to both national classification and IPC

| B. | FIELDS SEARCHED |
| --- | --- |

Minimum documentation searched (classification system followed by classification symbols)

B23Q15/18; G05B19/404

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2008-30127 A (SODICK CO., LTD.) 14 February 2008 (2008-02-14)<br>      paragraphs [0019]-[0026], [0047]-[0052], fig. 1, 2 | 1-3 |
| A | JP 7-75937 A (SODICK CO., LTD.) 20 March 1995 (1995-03-20)<br>      paragraphs [0029], [0044]-[0046] | 1-3 |
| A | JP 2016-2637 A (JTEKT CORP.) 12 January 2016 (2016-01-12)<br>      paragraphs [0094]-[0108] | 1-3 |
| A | JP 2011-56655 A (TOTTORI UNIVERSITY) 24 March 2011 (2011-03-24)<br>      paragraph [0031] | 1-3 |
| A | JP 2019-63959 A (FANUC CORPORATION) 25 April 2019 (2019-04-25)<br>      paragraph [0040] | 1-3 |

☐ Further documents are listed in the continuation of Box C.     ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **29 September 2023** | **10 October 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/032831**

| Patent document cited in search report | | | Publication date (day/month/year) | Patent family member(s) | | | Publication date (day/month/year) |
|---|---|---|---|---|---|---|---|
| JP | 2008-30127 | A | 14 February 2008 | (Family: none) | | | |
| JP | 7-75937 | A | 20 March 1995 | US | 5523953 | A | |
| | | | | columns 6-8 | | | |
| | | | | EP | 641624 | A1 | |
| | | | | DE | 69409315 | C | |
| | | | | SG | 44619 | A | |
| | | | | HK | 1006057 | A | |
| | | | | CN | 1103344 | A | |
| JP | 2016-2637 | A | 12 January 2016 | (Family: none) | | | |
| JP | 2011-56655 | A | 24 March 2011 | (Family: none) | | | |
| JP | 2019-63959 | A | 25 April 2019 | US | 2019/0099849 | A1 | |
| | | | | paragraphs [0066]-[0083] | | | |
| | | | | DE | 102018123847 | A1 | |
| | | | | CN | 109613887 | A | |

Form PCT/ISA/210 (patent family annex) (January 2015)

**REFERENCES CITED IN THE DESCRIPTION**

**Patent documents cited in the description**

- JP 2004154907 A
- JP 2022202074 A